# DEMANDE DE BREVET EUROPEEN

(11) **EP 2 722 849 A1**
(43) Date de publication de la demande: **23.04.2014**
(21) Numéro de dépôt: 13188216.9
(22) Date de dépôt: 11.10.2013
(51) Int. Cl.: G11B 27/10, G11B 27/28, G11B 27/34, G06F 17/30, G10L 15/00

(54) **Procédé de navigation dans un contenu audio comprenant des extraits musicaux**

(30) Priorité: 17.10.2012 FR 1259905
(71) Demandeur: Orange, 75015 Paris (FR)
(72) Inventeur: le Mer, Pascal, 22700 PERROS-GUIREC (FR); Botherel, Valérie, 22450 MANTALLOT (FR); Leblouch, Olivier, 35000 RENNES (FR); Teissere, Olivier, 22300 LANNION (FR); Charlet, Delphine, 22300 LANNION (FR)

(57) **Abrégé**

L'invention se rapporte à un procédé de navigation dans un contenu audio (C1, C2) comportant des extraits de type musical. Selon l'invention, le procédé de navigation est adapté à obtenir des métadonnées (MD1, MD2) comprenant des identifiants d'extrait musicaux et des données de position temporelle des extraits dans le contenu; à afficher dans une première zone, des identifiants d'extrait et dans une deuxième zone, une représentation temporelle du contenu dans laquelle des extraits sont représenté sous forme de plages positionnée en fonction des données de position; à détecter une action utilisateur relative à un identifiant d'extrait ou à une plage affichée; à mettre en évidence un identifiant d'extrait et au moins une plage représentant ledit extrait ou à afficher des métadonnées relatives audit extrait, en fonction de l'action détectée.

L'invention se rapporte également un procédé de détermination des métadonnées.

L'invention concerne aussi un dispositif (NAV) et un serveur aptes à mettre en oeuvre le procédé de navigation et le procédé de détermination respectivement.

## Description

La présente invention concerne un procédé et un système de navigation dans un contenu sonore de type vocal comprenant des extraits musicaux.

Des services connus, accessibles par exemple par le réseau Internet, proposent à des utilisateurs d'accéder à des contenus audios, généralement appelés 'podcasts', correspondant à des enregistrements d'émissions radiodiffusées précédemment.

De tels contenus contiennent une pluralité d'extraits de type musical généralement séparés par des extraits de type « parlé ».

La prise de connaissance d'informations contenues dans un tel contenu audio nécessite l'écoute complète du signal sonore correspondant. Dans le cas d'un contenu de taille importante, cette opération peut être très consommatrice de temps.

Les techniques de compression temporelle d'un fichier sonore telles que l'accélération, la suppression des portions de signal inutiles (par exemple, les pauses)... ne sont pas adaptées pour des contenus contenant des extraits musicaux car elles entrainent une dégradation du son du contenu, qui n'est pas acceptable pour ce type d'extraits.

La navigation dans un contenu de grande taille comportant des extraits musicaux n'est donc pas aisée.

Il existe donc un besoin pour accéder rapidement et simplement à des informations pertinentes d'un contenu vocal de grande taille comprenant des extraits musicaux.

L'invention vient améliorer la situation.

A cet effet, l'invention se rapporte à un procédé de navigation dans un contenu audio comportant des extraits de type musical. Le procédé comporte les étapes suivantes :
- obtention des métadonnées comprenant pour au moins un extrait musical dudit contenu, un identifiant dudit extrait et des données de position temporelle permettant de repérer une position dudit extrait dans ledit contenu;
- affichage dans une première zone, d'au moins un identifiant d'extrait obtenu;
- affichage dans une deuxième zone, d'une représentation temporelle dudit contenu audio dans laquelle au moins un extrait est représenté sous forme d'au moins une plage positionnée dans ladite représentation en fonction des données de position obtenues pour ledit au moins un extrait;
- détection d'une action utilisateur relative à un élément affiché dans une des zones, ledit élément étant un identifiant d'extrait ou une plage représentant un extrait;
- mise en évidence d'un identifiant d'extrait et d'au moins une plage représentant ledit extrait, en cas de détection d'une action utilisateur relative à un élément dans la première zone;
- affichage de métadonnées relatives audit extrait représenté par la plage sélectionnée, en cas de détection d'une action utilisateur relative à un élément de la deuxième zone.

L'affichage d'identifiants d'extraits dans une première zone et d'une représentation temporelle du contenu audio dans une deuxième zone permet de proposer à un utilisateur deux types de navigation. L'utilisateur peut ainsi soit sélectionner un identifiant d'extrait dans la première zone, soit sélectionner une plage représentant un extrait de type musical dans la représentation temporelle du contenu affichée dans la deuxième zone. La sélection d'un identifiant d'extrait lui permet de visualiser la plage associée à cet extrait dans la représentation du contenu affichée dans la deuxième zone et ainsi de repérer où se trouve l'extrait dans le contenu. La sélection d'une plage lui permet d'obtenir des informations complémentaires pour l'extrait représenté par la plage.

Le procédé permet ainsi à un utilisateur de naviguer facilement dans le contenu sans avoir à écouter tout le contenu. Il permet à l'utilisateur de savoir quels extraits musicaux figurent dans le contenu et d'accéder à un extrait musical du contenu sans avoir à écouter l'intégralité du contenu.

Un ou plusieurs extraits du contenu sont associés à un identifiant d'extrait lors d'une phase préalable.

Pour un identifiant d'extrait, une ou plusieurs plages représentant un ou plusieurs extraits associés sont mis en évidence dans une représentation du contenu audio. Un utilisateur peut ainsi identifier visuellement la position du ou des extraits dans le contenu.

La sélection d'un identifiant d'extrait par un utilisateur lui permet de visualiser le ou les extraits associés à cet identifiant dans la représentation du contenu vocal. Il peut ensuite écouter un ou plusieurs de ces extraits.

La mise en évidence des extraits associés à un même identifiant d'extrait permet à un utilisateur de demander la restitution d'un de ces extraits sans avoir à écouter les extraits précédents.

La sélection d'une plage dans la représentation du contenu audio par un utilisateur lui permet de visualiser des métadonnées relatives à l'extrait correspondant à la plage. Il peut ensuite écouter un ou plusieurs de ces extraits.

L'utilisateur dispose ainsi de nouvelles possibilités de navigation dans le contenu.

Selon un mode particulier de réalisation du procédé de navigation, les métadonnées comportent, pour au moins un extrait, des données d'usage associées audit extrait et des données d'usages sont affichées suite à la détection de ladite action utilisateur.

Les données d'usage sont des informations complémentaires affichées lors de la détection d'une action utilisateur.

Selon une caractéristique particulière, les données d'usage affichées comportent des données permettant de déclencher une action relative audit extrait.

L'utilisateur peut ainsi déclencher une action relative à un extrait de façon simple et sans avoir à rechercher l'extrait dans le contenu dans le contenu audio.

Selon un mode réalisation particulier, le procédé de navigation comporte une étape de déclenchement de ladite action.

Ladite action est par exemple une restitution dudit extrait, un téléchargement dudit extrait, la consultation d'un site Internet ayant trait à cet extrait.

L'utilisateur peut ainsi déclencher une ou plusieurs actions relatives à un extrait sans avoir à écouter l'intégralité du contenu audio.

Selon un mode particulier de réalisation du procédé de navigation, le contenu audio comporte une alternance d'extraits parlés et d'extraits musicaux, l'étape d'obtention de métadonnées comprend l'obtention pour au moins un extrait de type parlé, d'au moins un mot clé dudit extrait et de données de position temporelle permettant de repérer une position dudit extrait dans ledit contenu, l'étape d'affichage dans la première zone comprend l'affichage d'au moins un mot clé obtenu et le procédé comporte une étape de détection d'une action utilisateur relative à un mot clé affiché et une étape de mise en évidence dudit mot clé et d'au moins une plage représentant au moins un extrait, et pour laquelle des données de position temporelle sont associées audit mot clé dans lesdites métadonnées.

L'invention se rapporte également à un procédé de détermination de métadonnées relatives à au moins un extrait de type musical d'un contenu audio, **caractérisé en ce qu'il** comporte les étapes suivantes :
- analyse dudit contenu pour déterminer des données de position temporelle permettant de repérer une position d'au moins un extrait de type musical dans ledit contenu;
- obtention d'un identifiant dudit au moins un extrait;
- enregistrement dans une mémoire, de métadonnées comportant pour ledit au moins un extrait, l'identifiant dudit au moins un extrait et lesdites données de position temporelle déterminées pour ledit au moins un extrait.

Cette étape préalable contribue à la construction d'un ensemble de métadonnées contenant des données de position temporelle dans le contenu, associées à des identifiant de locuteur. Les données de position temporelle d'un extrait permettent d'identifier la position de cet extrait dans le contenu.

Selon un mode de réalisation particulier du procédé de détermination, le contenu audio comporte une alternance d'extraits parlés et d'extraits musicaux, ladite analyse comporte une étape de détection des extraits parlés dans ledit contenu, une étape de détermination de données de position temporelle des extraits parlés et une étape de détermination de données de position temporelle des extraits de type musical en fonction des données de position temporelle des extraits parlés déterminés.

Le repérage des extraits parlés permet de repérer ensuite facilement les extraits musicaux.

Selon une caractéristique particulière du procédé de détermination, les données de position temporelle d'un extrait comprennent une position temporelle de début d'extrait et une position temporelle de fin d'extrait, et une position de début, respectivement une position de fin d'un extrait de type musical est la position de fin de l'extrait parlé précédant ledit extrait de type musical, respectivement la position de début de l'extrait parlé suivant ledit extrait de type musical.

Selon un mode de réalisation particulier du procédé de détermination, l'étape d'obtention dudit identifiant dudit au moins un extrait comprend une étape de calcul d'au moins une signature numérique pour ledit extrait et une étape de recherche de ladite au moins une signature dans une base de signatures comportant des signatures et des identifiants associés.

Une ou plusieurs signatures calculées pour un extrait permettent d'identifier cet extrait de façon unique. Il est ainsi possible d'obtenir un identifiant d'extrait, par exemple un titre en recherchant la ou les signatures dans une base de données comportant des identifiants d'extraits associés respectivement à une ou plusieurs signatures.

Selon un mode de réalisation particulier, le procédé de détermination comporte une étape de détermination d'au moins un mot clé d'au moins un extrait parlé et une étape d'enregistrement dudit mot clé dans des données d'usage des métadonnées relatives audit extrait.

Les mots clés permettent de faciliter la navigation dans les extraits parlés du contenu.

L'invention se rapporte également à un dispositif de navigation dans un contenu audio comportant des extraits de type musical **caractérisé en ce qu'il** comporte :
- des moyens d'obtention de métadonnées comprenant pour au moins un extrait musical dudit contenu, un identifiant dudit extrait et des données de position temporelle permettant de repérer une position dudit extrait dans ledit contenu;
- des moyens d'affichage dans une première zone, d'au moins un identifiant d'extrait obtenu;
- des moyens d'affichage dans une deuxième zone, d'une représentation temporelle dudit contenu audio dans laquelle au moins un extrait est représenté sous forme d'au moins une plage positionnée dans ladite représentation en fonction des données de position obtenues pour ledit au moins un extrait;
- des moyens de détection d'une action utilisateur relative à un élément affiché dans une des zones, ledit élément étant un identifiant d'extrait ou une plage représentant un extrait;
- des moyens de mise en évidence d'un identifiant d'extrait et d'au moins une plage représentant ledit extrait, en cas de sélection d'un élément dans la première zone;
- des moyens d'affichage de métadonnées relatives audit extrait représenté par la plage sélectionnée, en cas de sélection d'un élément de la deuxième zone.

L'invention se rapporte encore à un dispositif de détermination de métadonnées relatives à au moins un extrait de type musical d'un contenu audio, **caractérisé en ce qu'il** comporte :
- des moyens d'analyse dudit contenu pour déterminer des données de position temporelle permettant de repérer une position d'au moins un extrait de type musical dans ledit contenu;
- des moyens d'obtention d'un identifiant dudit au moins un extrait;
- des moyens d'enregistrement dans une mémoire, de métadonnées comportant pour ledit au moins un extrait, l'identifiant dudit au moins un extrait et lesdites données de position temporelle déterminées pour ledit au moins un extrait.

L'invention se rapporte aussi à un produit programme d'ordinateur comprenant des instructions pour mettre en oeuvre les étapes du procédé de navigation tel que décrit précédemment, lorsqu'il est chargé et exécuté par un processeur.

L'invention se rapporte enfin à un produit programme d'ordinateur comprenant des instructions pour mettre en oeuvre les étapes du procédé de détermination de métadonnées tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 illustre un système de navigation selon un mode de réalisation de l'invention,
- la figure 2 est un organigramme illustrant les différentes étapes d'un procédé de navigation mis en oeuvre dans un système de navigation selon un premier mode de réalisation,
- la figure 3 illustre un exemple de métadonnées associées à un contenu audio selon un premier mode de réalisation,
- la figure 4 illustre un exemple d'interface graphique affichée pour un contenu selon un premier mode de réalisation,
- la figure 5 est un organigramme illustrant les différentes étapes d'un procédé de navigation mis en oeuvre dans un système de navigation selon un deuxième mode de réalisation,
- la figure 6 illustre un exemple de métadonnées associées à un contenu vocal selon un deuxième mode de réalisation,
- les figures 7a, 7b et 7c illustrent des exemples d'interface graphique affichées pour un contenu selon un deuxième mode de réalisation,
- la figure 8 est un organigramme illustrant les différentes étapes d'un procédé de détermination selon un mode de réalisation,
- la figure 9 représente des extraits déterminés pour un contenu,
- la figure 10 est schéma illustrant un serveur apte à réaliser les étapes d'un procédé de détermination selon un mode de réalisation,

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

Dans la présente description, l'expression « extrait de type musical » est équivalente à l'expression « extrait musical » et l'expression « extrait de type parlé » est équivalente à l'expression « extrait parlé »

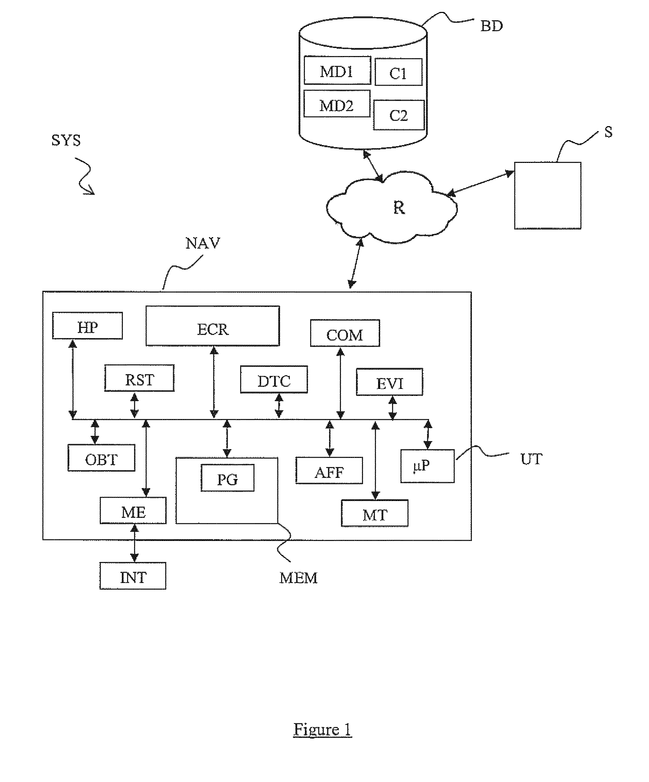

Un premier mode de réalisation de l'invention va maintenant être décrit en référence aux figures 1 à 4.

La **figure 1** représente un système de navigation SYS selon un mode de réalisation de l'invention.

Le système SYS comprend un dispositif de navigation NAV, une base de données BD et un serveur S.

A titre d'alternative, le système de navigation NAV comporte uniquement un dispositif de navigation NAV.

Le dispositif de navigation NAV est par exemple un ordinateur de type PC.

Typiquement, le dispositif de navigation NAV peut être intégré dans un ordinateur, un terminal de communication tel qu'un téléphone mobile, un décodeur TV connecté à un téléviseur ou plus généralement tout équipement multimédia.

Le dispositif de navigation NAV comporte une unité de traitement UT munie d'un microprocesseur, reliée à une mémoire MEM. L'unité de traitement UT est pilotée par un programme informatique PG. Le programme informatique PG comporte des instructions de programme adaptées à mettre en oeuvre notamment un procédé de navigation selon un des modes de réalisation de l'invention décrit ultérieurement.

L'unité de traitement UT est apte à recevoir via un module d'entrée ME, des instructions d'une interface utilisateur INT, par exemple une interface tactile, une souris d'ordinateur ou tout autre moyen de sélection par l'utilisateur.

Le dispositif de navigation NAV comporte également un écran de visualisation ECR, un dispositif de restitution sonore HP et un module d'affichage AFF pour l'affichage sur l'écran de visualisation ECR.

Le dispositif de restitution sonore HP est par exemple un dispositif de type hautparleur.

Il comporte également un module de restitution du son RST pour la diffusion d'un contenu audio par le dispositif de restitution sonore HP.

Le dispositif de navigation NAV comporte également un module de communication COM avec le serveur S via un réseau de télécommunications R, un module d'obtention OBT, un module de traitement MT, un module de détection DTC et un module de mise en évidence EVI.

Dans le mode de réalisation décrit, le dispositif de restitution sonore HP et l'écran ECR sont intégrés au dispositif de navigation NAV.

A titre d'alternative, le dispositif de restitution sonore HP et/ou l'écran sont séparés du dispositif de navigation NAV et reliés au dispositif de navigation NAV.

La base de données BD comporte au moins un contenu et au moins un ensemble de métadonnées associées audit au moins un contenu.

Par exemple, la base de données BD comporte une pluralité de contenus C1, C2 et comporte également des métadonnées MD1 associées au contenu C1 et des métadonnées MD2 associées au contenu C2.

Le serveur S est apte à accéder à la base de données BD. Il est notamment apte à obtenir un contenu et un ensemble de métadonnées enregistrés dans la base de données BD. Le serveur S est également apte à transmettre au dispositif de navigation NAV un contenu et un ensemble de métadonnées.

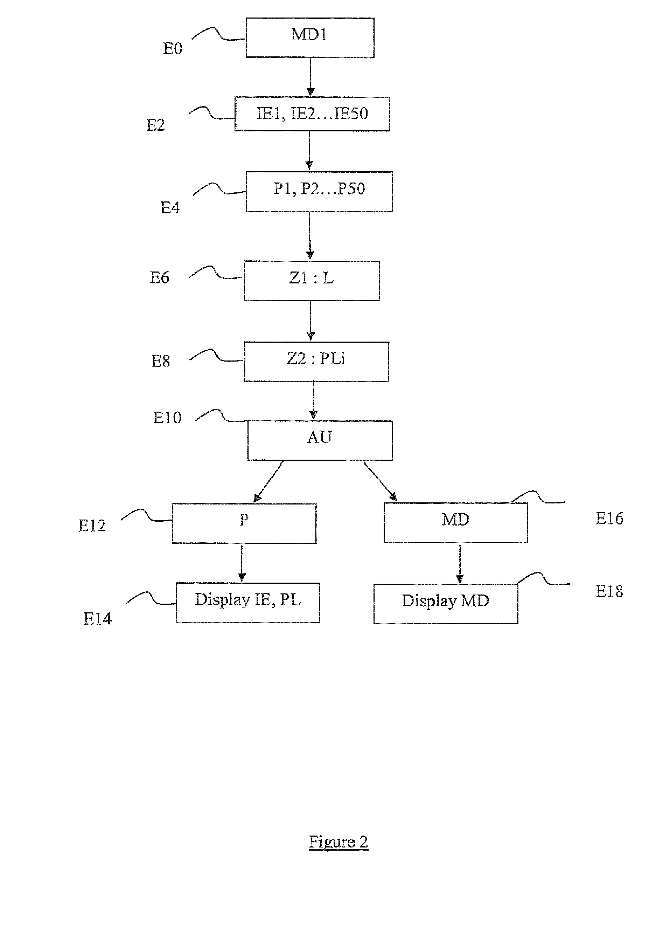

Un premier mode de réalisation du procédé de navigation dans un contenu audio C1 mis en oeuvre dans le système SYS va maintenant être décrit en référence à la **figure 2****.**

Dans ce mode de réalisation, le contenu audio C1 et un ensemble de métadonnées MD1 sont enregistrés dans une mémoire du dispositif de navigation NAV, par exemple dans la mémoire MEM.

Le contenu audio C1 et l'ensemble de métadonnées MD1 ont par exemple été transmis au dispositif de navigation NAV par le serveur S lors d'une étape préalable.

Le contenu C1 est un contenu audio contenant une pluralité d'extraits musicaux.

Un extrait de type musical du contenu C1 est une portion du contenu C1.

Lors d'une étape E0, le module d'obtention OBT du dispositif de navigation NAV obtient l'ensemble de métadonnées MD1 pour le contenu C1.

L'étape E0 d'obtention est, dans ce mode de réalisation, une étape de lecture dans une mémoire du dispositif de navigation NAV.

L'ensemble de métadonnées MD1 comprend des métadonnées pour au moins un extrait musical du contenu C1. Des métadonnées relatives à un extrait de type musical comprennent un identifiant d'extrait IE et des données de position temporelle P associées à l'identifiant d'extrait IE.

A titre d'alternative, les métadonnées relatives à un extrait musical comprennent également des données d'usage associées à l'identifiant d'extrait.

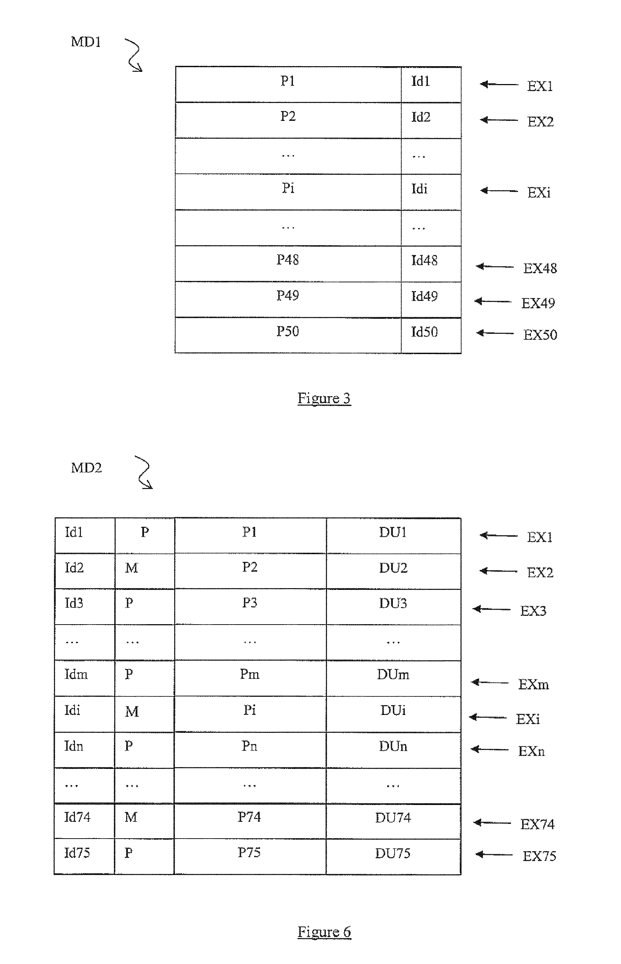

La **figure 3** représente un exemple de métadonnées MD1 déterminé pour le contenu audio C1.

L'ensemble de métadonnées MD1 contient par exemple des métadonnées relatives à 50 extraits musicaux EX1, EX2...EX50. Des données de position temporelle P1, P2...P50 relatives respectivement aux extraits EX1, EX2...EX50 sont enregistrées en association avec un identifiant d'extrait IE1, IE2...IE50.

Un identifiant IEi est par exemple un titre d'un extrait musical.

Les données de position temporelle Pi d'un extrait EXi d'identifiant IEi sont par exemple une position de début de l'extrait déterminée par rapport au début du contenu C1 et une position de fin de l'extrait déterminée par rapport au début du contenu C1.

Une position de début, respectivement de fin, d'extrait déterminée par rapport au début du contenu est par exemple un index permettant de déterminer la position de début, respectivement de fin, de l'extrait dans le contenu.

A titre d'alternative, les données de position temporelle Pi d'un extrait EXi d'identifiant IEi sont par exemple une position de début de l'extrait déterminée par rapport au début du contenu C1 et une durée de l'extrait considéré.

Les données de position temporelle permettent d'identifier la position d'un extrait dans le contenu.

Lors d'une étape E2, le module de traitement MT du dispositif de navigation NAV accède aux métadonnées MD1 et extrait des métadonnées MD1 obtenues lors de l'étape E0, des identifiants d'extraits IEi.

Par exemple, les identifiants IE1, IE2...IE50 sont extraits des métadonnées MD1.

Lors d'une étape E4, le module de traitement MT du dispositif de navigation NAV extrait des métadonnées MD1obtenues lors de l'étape E0, des données de position temporelles Pi.

Par exemple, les données de position P1, P2...P50 sont extraites des métadonnées MD1.

Lors d'une étape E6, le module d'affichage AFF du dispositif de navigation NAV affiche dans une première zone Z1 de l'écran ECR, une liste L des identifiants IEi extraits lors de l'étape E2.

Lors d'une étape E8, le module d'affichage AFF du dispositif de navigation NAV affiche dans une deuxième zone Z2 de l'écran ECR, une représentation temporelle du contenu C1 dans laquelle les extraits EXi représentés dans les métadonnées MD1 sont affichés sous la forme de plages PLi positionnées dans la représentation en fonction des données de position temporelle Pi extraites des métadonnées MD1 lors de l'étape E4.

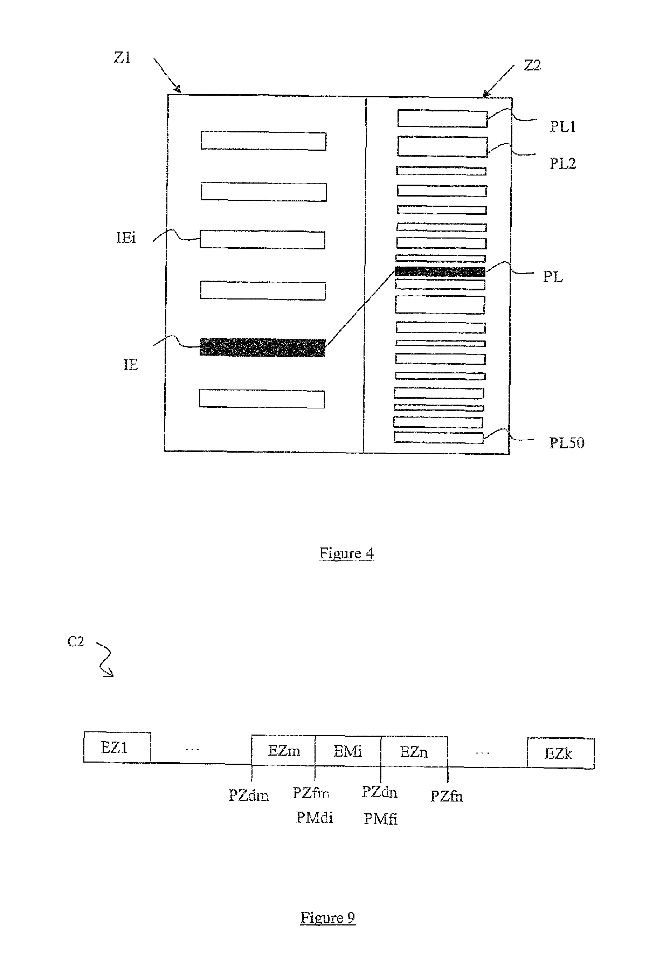

La **figure 4** illustre un exemple d'interface graphique affichée pour le contenu C1.

La zone Z1 contient les identifiants Id1, Id2...Id50.

Comme illustré sur la figure 4, tous les identifiants ne pouvant être affichés en même temps, la zone Z1 est par exemple affichée sous forme d'une fenêtre déroulante dans laquelle l'utilisateur peut se déplacer au moyen d'une interface tactile. Ainsi, à un instant donné, seule une partie de la liste L est affichée sur l'écran ECR et l'utilisateur peut visualiser et accéder à une partie non affichée de la liste au moyen de l'interface utilisateur INT.

La zone Z2 représente l'ensemble des plages PL1, PL2...PL50. Une plage PLi représente la position Pi d'un extrait EXi dans le contenu C1.

Lors d'une étape E10, le module de détection DTC du dispositif de navigation NAV détecte une action utilisateur AU relative à un identifiant affiché IE dans la première zone ou à une plage PL affichée dans la deuxième zone Z2. Un identifiant d'extrait IE, respectivement une plage PL affichée représente un élément affiché.

Dans le cas où l'action utilisateur AU détectée lors de l'étape E10 est relative à un identifiant d'extrait IE, l'étape E10 est suivie d'une étape E12 lors de laquelle des données de position temporelle P associées à l'identifiant d'extrait IE sélectionné sont extraites des métadonnées MD1obtenues, par le module de traitement MT du dispositif de navigation NAV.

L'étape E12 est suivie d'une étape E14 lors de laquelle le module de mise en évidence EVI du dispositif de navigation NAV commande la mise en évidence par le module d'affichage AFF, de l'identifiant d'extrait sélectionné par l'utilisateur et au moins une plage PL de la zone Z2 identifiée par les données de position temporelle extraites P.

La mise en évidence est par exemple réalisée par l'affichage d'un trait reliant l'identifiant d'extrait IE et la plage PL.

La figure 4 illustre la mise en évidence de l'identifiant d'extrait IE et de la plage PL dans la représentation du contenu audio C1.

A titre d'alternative ou en complément, un code de représentation prédéterminé, par exemple une couleur prédéterminée, une surbrillance, un clignotement..., est utilisé pour mettre en évidence l'identifiant d'extrait IE et la plage PL.

Dans le cas où l'action utilisateur AU détectée lors de l'étape E10 est relative à une plage PL, l'étape E10 est suivie d'une étape E16 lors de laquelle le module de traitement MT du dispositif de navigation NAV accède aux métadonnées MD1 et extrait des métadonnées MD enregistrées parmi les métadonnées MD1 en association avec les données de position temporelle représentant la plage PL sélectionnée par l'utilisateur.

L'étape E16 est suivie d'une étape E18 lors de laquelle les métadonnées MD sont affichées par le module d'affichage AFF du dispositif de navigation NAV.

Par exemple, une fonction zoom permet d'agrandir une partie du contenu affiché dans la zone Z2 et permet ainsi d'aider l'utilisateur à sélectionner une plage.

Les métadonnées MD sont affichées dans la plage sélectionnée PL.

Les métadonnées affichées sont par exemple l'identifiant IE.

A titre d'alternative, les métadonnées MD1 contiennent des données d'usage enregistrées en association avec les identifiants d'extrait IE1, IE2...IE50 et les métadonnées MD affichées sont extraites des données d'usage enregistrées pour ledit extrait.

Les données d'usage MD sont par exemple une vignette associée à une commande de restitution du contenu C1 à partir du début de l'extrait, un lien, par exemple une URL (pour « Uniform Resource Locator ») permettant l'accès à un site Web associé...

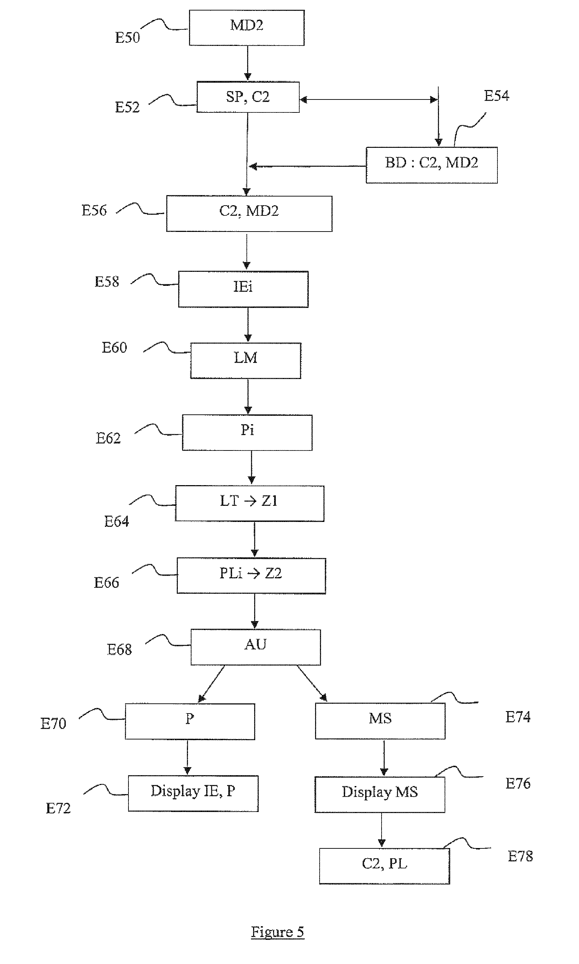

Un deuxième mode de réalisation du procédé de navigation dans un contenu audio C2 mis en oeuvre dans le système SYS va maintenant être décrit en référence à la **figure 5****.**

Le contenu C2 est un contenu audio contenant une alternance d'extraits parlés et d'extraits musicaux.

Lors d'une étape préalable E50, un ensemble de métadonnées MD2 est déterminé pour le contenu C2 par un dispositif de détermination (non représenté) puis enregistré dans la base de données BD.

L'ensemble de métadonnées MD2 comprend pour chaque extrait du contenu audio C2, des métadonnées associées à cet extrait. Les métadonnées associées à un extrait sont un identifiant d'extrait IE, un identifiant du type de l'extrait, des données de position temporelle P et des données d'usage DU.

A titre d'alternative, l'ensemble des métadonnées MD2 contient des métadonnées pour seulement certains des extraits. Par exemple, l'ensemble des métadonnées MD2 contient des métadonnées pour les extraits musicaux ou l'ensemble des métadonnées MD2 contient des métadonnées pour les extraits de durée supérieure à un seuil prédéterminé.

Un identifiant du type de l'extrait est une valeur indiquant si l'extrait est un extrait parlé ou un extrait musical. La valeur est par exemple 'P' si l'extrait est un extrait parlé et 'M' si l'extrait est un extrait musical.

Pour un extrait de type parlé, un identifiant d'extrait IE est une valeur identifiant l'extrait, par exemple un numéro d'ordre de l'extrait dans le contenu.

Les données d'usage DU associées à un extrait parlé IE contiennent, pour certains au moins des extraits, un ou plusieurs mots clés.

Pour un extrait de type musical, un identifiant d'extrait IE est par exemple un titre de l'extrait musical.

La **figure 6** représente un exemple de métadonnées MD2 déterminé pour le contenu audio C2.

L'ensemble de métadonnées MD2 contient par exemple des données de positionnement relatives à 75 extraits musicaux EX1, EX2...EX75. Des données de position temporelle P1, P2...P75 relatives respectivement aux extraits EX1, EX2...EX75 sont enregistrées en association avec un identifiant d'extrait IE1, IE2...IE75. Des données d'usage DU1, DU2...DU75 sont associées respectivement aux identifiants d'extraits IE1, IE2...IE75. Une valeur M ou P identifie le type de chaque extrait.

Les données de position temporelle Pi d'un extrait EXi d'identifiant IEi sont par exemple une position de début de l'extrait déterminée par rapport au début du contenu C2 et une position de fin de l'extrait déterminée par rapport au début du contenu C2.

A titre d'alternative, les données de position temporelle Pi d'un extrait EXi d'identifiant IEi sont par exemple une position de début de l'extrait déterminée par rapport au début du contenu C2 et une durée de l'extrait considéré.

Les données de position temporelle permettent d'identifier la position d'un extrait dans le contenu C2.

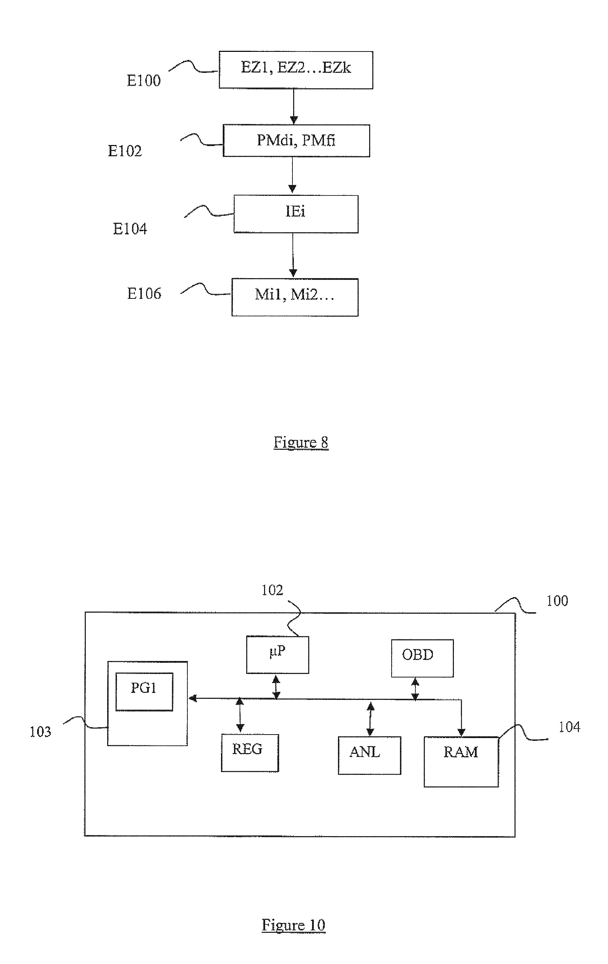

Un mode de réalisation particulier de l'étape E50 est décrit dans la suite de la description en référence à la figure 8.

Lors d'une étape E52, le dispositif de navigation NAV accède à un service SP du serveur S. Le service SP est par exemple un service en ligne disponible sur le Web proposant à un utilisateur d'écouter ou de réécouter des émissions radio diffusées précédemment. L'accès au service SP est par exemple effectué au moyen d'une application spécifique installée sur le dispositif de navigation NAV et exécutée par l'unité de traitement UT du dispositif de navigation NAV.

L'étape E52 comprend classiquement l'envoi d'une requête d'accès au service SP, la réception d'une réponse à la requête contenant une liste de contenus proposés, l'affichage de la liste reçue sur l'écran ECR du dispositif de navigation NAV et l'envoi d'une requête d'accès à un contenu C2 de la liste affichée.

Le contenu C2 demandé dans la requête d'accès est par exemple sélectionné dans la liste affichée, par un utilisateur du dispositif NAV au moyen de l'interface utilisateur INT.

L'étape E52 est suivie d'une étape E54 lors de laquelle, suite à la réception de la requête d'accès au contenu C2, le serveur S accède à la base de données BD obtient d'une part le contenu C2 demandé et des métadonnées MD2 associées au contenu C2. Puis, le serveur S transmet le contenu C2 et les métadonnées MD2 associées au dispositif de navigation NAV.

Le module de communication COM du dispositif de navigation NAV reçoit d'une part le contenu C2 et d'autre part les métadonnées MD2 lors d'une étape E56.

Lors d'une étape E58, le module de traitement MT du dispositif de navigation NAV extrait des métadonnées MD2 obtenues, les identifiants IEi correspondant aux extraits musicaux, c'est-à-dire les identifiants IEi enregistrés en association avec un identifiant de type de valeur 'M'.

Par exemple, les identifiants IE2, IE4...IEi...IE74 sont extraits des métadonnées MD2.

Lors d'une étape E60, le module de traitement MT du dispositif de navigation NAV établit une liste LM des mots clés représentés dans les données d'usage associées aux extraits parlés. La liste LM est établie par extraction des métadonnées MD2 des mots clés contenus dans les données d'usage DU associées aux extraits parlés. Dans le cas où un mot clé est représenté dans plusieurs extraits, seule une instance du mot clé est introduite dans la liste LM.

Lors d'une étape E62, le module de traitement MT du dispositif de navigation NAV extrait des métadonnées MD2, les données de position temporelle Pi.

Par exemple, les données de position P1, P2...P75 sont extraites des métadonnées MD2.

Lors d'une étape E64, le module d'affichage AFF du dispositif de navigation NAV affiche dans une première zone Z1 de l'écran ECR, une liste LT contenant des identifiants d'extraits musicaux et des mots clés de la liste LM.

Lors d'une étape E66, le module d'affichage AFF du dispositif de navigation NAV affiche dans une deuxième zone Z2 de l'écran ECR, une représentation temporelle du contenu C2 dans laquelle les extraits EXi représentés dans les métadonnées MD2 sont affichés sous la forme de plages PLi positionnées dans la représentation en fonction des données de position temporelle Pi extraites des métadonnées MD2 lors de l'étape E62.

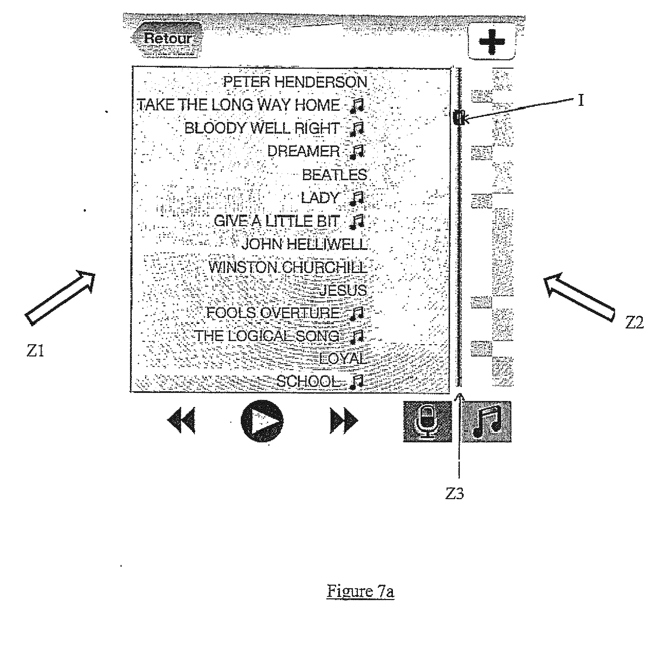

La **figure 7a** illustre un exemple d'interface graphique affichée pour le contenu C2.

La zone Z1 contient la liste LT, c'est-à-dire les identifiants d'extraits des extraits musicaux et les mots clés de la liste LM.

Par exemple, un code de représentation différent permet de différencier les identifiants des extraits musicaux des mots clés des extraits parlés affichés dans la zone Z1.

Comme illustré sur la figure 7a, la liste LT ne pouvant être affichée en entier, la liste LT est par exemple affichée dans la zone Z1 sous forme d'une fenêtre déroulante dans laquelle l'utilisateur peut se déplacer au moyen d'une interface tactile. Ainsi, à un instant donné, seule une partie de la liste LT est affichée sur l'écran ECR et l'utilisateur peut accéder à une partie non affichée de la liste au moyen de l'interface utilisateur INT.

La zone Z2 représente l'ensemble des plages PL1, PL2...PL75. Une plage PLi représente la position Pi d'un extrait EXi dans le contenu C1.

Un code de représentation différent, par exemple une couleur différente et une position différente par rapport à un axe représentant la chronologie du contenu C2, permet à l'utilisateur de différencier les extraits parlés et les extraits musicaux lorsqu'il regarde l'écran.

Une zone Z3 affichée sur l'écran ECR contient une ligne verticale représentant la chronologie du contenu C2. Un curseur I positionné sur cette ligne, indique une position courante d'une tête de lecture utilisée pour la restitution sonore du contenu vocal C2 par le dispositif de restitution HP.

Lors d'une étape E68, le module de détection DTC du dispositif de navigation NAV détecte une action utilisateur AU relative à un identifiant affiché IE dans la première zone ou à une plage PL affichée dans la deuxième zone Z2. Un identifiant d'extrait IE, respectivement une plage PL affichée représente un élément affiché.

Dans le cas où l'action utilisateur détectée lors de l'étape E68 est relative à un identifiant d'extrait IE, l'étape E68 est suivie d'une étape E70 lors de laquelle le module de traitement MT du dispositif de navigation NAV extrait des métadonnées MD2, des données de position temporelle P associées à l'identifiant IE sélectionné.

L'étape E70 est suivie d'une étape E72 lors de laquelle le module de mise en évidence EVI du dispositif de navigation NAV commande la mise en évidence par le module d'affichage AFF, de l'identifiant d'extrait sélectionné par l'utilisateur et d'au moins une plage PL de la zone Z2 identifiée par les données de position temporelle extraites P extraites lors de l'étape E70.

Par exemple, un code de représentation prédéterminé, par exemple une couleur prédéterminée, est utilisé pour mettre en évidence l'identifiant d'extrait IE et la plage PL.

A titre d'alternative, le code de représentation est une surbrillance ou un clignotement.

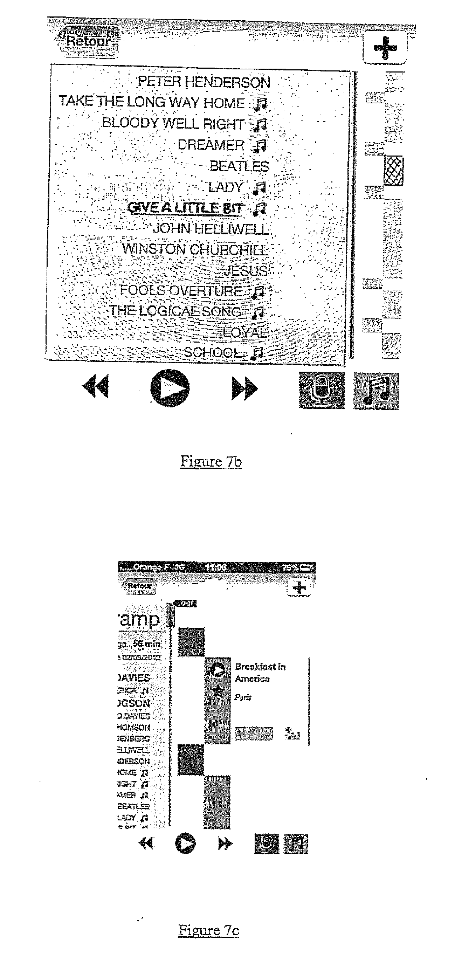

La **figure 7b** illustre un exemple d'interface graphique dans laquelle l'identifiant d'extrait 'Give a little bit' et une plage correspondante sont mis en évidence.

Dans le cas où l'action utilisateur détectée lors de l'étape E68 est relative à une plage PL, l'étape E68 est suivie d'une étape E74 lors de laquelle le module de traitement MT du dispositif de navigation NAV accède aux métadonnées MD2 et extrait des métadonnées MS enregistrées parmi les métadonnées MD1 en association avec les données de position temporelle représentant la plage PL sélectionnée par l'utilisateur.

L'étape E74 est suivie d'une étape E76 lors de laquelle des métadonnées relatives à l'extrait considéré sont affichées.

Par exemple, une fonction zoom permet d'agrandir une partie du contenu affiché dans la zone Z2 et permet ainsi d'aider l'utilisateur à sélectionner une plage.

Les métadonnées MS sont affichées dans la plage sélectionnée PL.

Les métadonnées affichées MS sont par exemple l'identifiant IE.

A titre d'alternative, les métadonnées MS affichées sont extraites des données d'usage DU enregistrées pour ledit extrait.

La **figure 7c** illustre une interface graphique dans laquelle un titre et des vignettes associées à l'extrait sont affichées suite à la détection d'une action utilisateur relative à une plage.

Lors d'une étape E78, suite à une instruction de lecture transmise par l'utilisateur, le module de traitement MT déclenche la restitution du contenu vocal C2 à partir du début de la plage PL sélectionnée.

La restitution du contenu vocal C2 à partir du début de la plage PL, c'est-à-dire à partir du début de l'extrait représenté par la plage PL, représente une action déclenchée sur un des extraits.

Un mode de réalisation d'un procédé de détermination d'un ensemble de métadonnées MD2 associées à un contenu audio C2 va maintenant être décrit en référence à la **figure 8****.**

Le contenu C2 contient une alternance d'extraits parlés et d'extraits musicaux.

Lors d'une première étape E100, des extraits parlés sont déterminés dans le contenu C2.

Un extrait parlé est une portion du contenu C2 contenant un signal vocal. Les extraits parlés sont par exemple déterminés par une méthode de segmentation décrite par exemple dans le document intitulé « Speech/music segmentation using entropy and dynamism features in a HMM classification framework » de J. Ajmera, I. McCowan et H. Bourlard (Speech Communication 40 (2003) 351-363).

Par exemple, les extraits parlés déterminés pour le contenu C2 sont les extraits EZ1, EZ2,...EZk.

Des données de position temporelle PZi de chaque extrait parlé EZi dans le contenu C2 sont déterminées et enregistrées en association avec un identifiant d'extrait dans une mémoire.

Les données de position temporelle PZi d'un extrait EZi sont par exemple, une position de début de l'extrait, c'est-à-dire une position relative du début de l'extrait par rapport au début du contenu C2, et une position de fin de l'extrait, c'est-à-dire une position relative de fin de l'extrait par rapport au début du contenu C2.

A titre d'alternative, les données de position temporelle d'un extrait sont par exemple, une position de début de l'extrait et une durée de l'extrait.

On obtient ainsi k extraits parlés de position EZ1, EZ2...EZk de position respective PZ1, PZ2 ... PZk.

La **figure 9** représente des extraits déterminés pour le contenu C2.

La position PZi dans le contenu C2 d'un extrait parlé EZi est déterminée par une position PZdi de début de l'extrait et une position PZfi de fin de cet extrait.

Lors d'une étape E102, des données de position temporelle PMi sont déterminées pour les extraits de type musical EMi contenus dans le contenu C2.

Dans ce mode de réalisation où le contenu C2 contient une alternance d'extraits musicaux et d'extraits parlés, le début d'un extrait musical considéré correspond à la fin de l'extrait parlé précédent et la fin de l'extrait musical considéré correspond au début de l'extrait parlé suivant.

Par exemple, (k-1) extraits musicaux EMi sont obtenus pour le contenu C2 et les données de position temporelle PMi d'un extrait EMi sont une position de début PMdi et une position de fin PMfi. La position de début PMdi correspond à la position PZfm de l'extrait parlé précédent l'extrait musical considéré et la position PMfi correspond à la position de début PZdn de l'extrait parlé suivant l'extrait musical considéré.

La figure 9 représente également un extrait musical EMi positionné après un extrait parlé EZm et avant un extrait parlé EZn.

Lors d'une étape E104, un identifiant d'extrait IEi est obtenu pour chaque extrait musical EMi.

Un identifiant d'extrait IEi est par exemple un titre de l'extrait considéré IEi.

Par exemple, une ou plusieurs signatures sont calculées pour une ou plusieurs portions de l'extrait. La ou les signatures calculées sont ensuite comparées à une base de données contenant une pluralité de titres associés respectivement avec une ou plusieurs signatures. Le titre pour lequel la ou les signatures associées correspondent à la ou aux signatures calculées est attribué à l'extrait musical considéré.

Lors d'une étape E106, les identifiants d'extrait IEi déterminés lors de l'étape E104 sont enregistrés en association avec les données de position temporelle PMi déterminées pour les extraits de type musical EMi lors de l'étape E102.

Lors d'une étape E106, un ou plusieurs mots clés Mi1, Mi2... sont déterminés pour au moins un extrait parlé EZi déterminé lors de l'étape E100.

Les mots clés sont par exemple des noms propres, par exemple des noms d'artistes.

Les noms d'artistes sont par exemple détectés par un moteur de détection d'entités nommées, configuré pour détecter des noms de personnes, et en particulier des noms d'artistes. Cette détection d'entités nommées utilise par exemple un dictionnaire de noms d'artistes.

A titre d'alternative, elle utilise en complément, un module d'analyse linguistique du contexte qui permet de lever des ambiguïtés de catégorie (par exemple « Orange » est-il le nom d'une organisation ou d'une ville ?) ou de détecter des entités nommées hors dictionnaire.

En variante, les extraits de type musical sont d'abord déterminés dans le contenu C2 et la position des extraits parlés est déterminée par rapport à la position des extraits de type musical.

Egalement, à titre de variante, un identifiant d'extrait obtenu lors de l'étape E104 est lu dans un contenu CTR associé au contenu audio C2. Le contenu CTR est un contenu de type texte contenant une transcription textuelle de chaque extrait parlé du contenu C2 et dans lequel un titre a été inséré à la place de chaque extrait de type musical.

Dans cette variante, le signal vocal correspondant à un extrait parlé est converti en une transcription textuelle STT à l'aide d'un algorithme classique de "Speech to Text". La transcription textuelle STT comprend les mots du texte et une estampille temporelle représentative de la position du mot dans le contenu audio C2 associée à chaque mot.

Puis, la transcription textuelle STT obtenue est comparée avec le contenu CTR.

La comparaison permet de repérer dans le contenu associé CTR, le texte correspondant aux extraits parlés et fait apparaître des portions de texte, situées entre deux extraits parlés et qui ne figurent pas dans la transcription STT.

Une portion de texte située entre deux extraits parlés et qui ne figure pas dans la transcription STT représente un titre d'un extrait musical, c'est-à-dire un identifiant d'extrait.

Selon un mode de réalisation choisi et représenté à la **figure 10****,** un serveur mettant en oeuvre un procédé de détermination de métadonnées selon l'invention est par exemple un ordinateur 100 qui comporte de façon connue, notamment une unité de traitement 102 équipée d'un microprocesseur, une mémoire morte de type ROM ou EEPROM 103, une mémoire vive de type RAM 104.

Le serveur 100 peut comporter de manière classique et non exhaustive les éléments suivants: un écran, un microphone, un haut-parleur, un moyen de stockage...

Ce serveur 100 comprend un module d'analyse ANL, un module OBD d'obtention d'un identifiant et un module d'enregistrement REG.

Un contenu audio C comportant des extraits de type musical est enregistré dans une mémoire accessible par le serveur 100.

Le module d'analyse ANL est apte à analyser le contenu C pour déterminer des données de position temporelle permettant de repérer une position d'au moins un extrait de type musical dans ledit contenu.

Le module d'obtention d'un identifiant OBD est apte à obtenir un identifiant dudit au moins un extrait.

Le module d'enregistrement REG est apte à enregistrer dans une mémoire, des métadonnées comportant pour ledit au moins un extrait, l'identifiant dudit au moins un extrait et lesdites données de position temporelle déterminées pour ledit au moins un extrait.

La mémoire morte 103 comporte des registres mémorisant un programme d'ordinateur PG1 comportant des instructions de programme adaptées à réaliser les étapes d'un procédé de détermination de métadonnées selon l'invention.

Lors de la mise sous tension, le programme PG1 stocké dans la mémoire de type EEPROM 103 est transféré dans la mémoire vive qui contiendra alors un code exécutable ainsi que des registres pour mémoriser les variables nécessaires à la mise en oeuvre d'une étape d'analyse dudit contenu pour déterminer des données de position temporelle permettant de repérer une position d'au moins un extrait de type musical dans ledit contenu; d'une étape d'obtention d'un identifiant dudit au moins un extrait et d'une étape d'enregistrement dans une mémoire, de métadonnées comportant pour ledit au moins un extrait, l'identifiant dudit au moins un extrait et lesdites données de position temporelle déterminées pour ledit au moins un extrait.

De manière plus générale un moyen de stockage, lisible par un ordinateur ou par un microprocesseur, intégré ou non au dispositif, éventuellement amovible, mémorise un programme mettant en oeuvre les étapes d'un procédé de transmission d'une notification relative à un flux en cours de diffusion, selon l'invention.

## Revendications

1. Procédé de navigation dans un contenu audio (C1, C2) comportant des extraits de type musical **caractérisé en ce qu'il** comporte les étapes suivantes :
- obtention (E0, E50) des métadonnées (MD1, MD2) comprenant pour au moins un extrait musical dudit contenu, un identifiant (IE) dudit extrait et des données (P) de position temporelle permettant de repérer une position dudit extrait dans ledit contenu;
- affichage (E6, E64) dans une première zone (Z1), d'au moins un identifiant d'extrait obtenu;
- affichage (E8, E66) dans une deuxième zone (Z2), d'une représentation temporelle dudit contenu audio dans laquelle au moins un extrait est représenté sous forme d'au moins une plage (PL) positionnée dans ladite représentation en fonction des données de position obtenues pour ledit au moins un extrait;
- détection (E10, E68) d'une action utilisateur (AU) relative à un élément affiché dans une des zones (Z1, Z2), ledit élément étant un identifiant d'extrait ou une plage représentant un extrait;
- mise en évidence (E14, E72) d'un identifiant d'extrait et d'au moins une plage représentant ledit extrait, en cas de détection d'une action utilisateur relative à un élément dans la première zone (Z1);
- affichage (E18, E76) de métadonnées (MD, MS) relatives audit extrait représenté par la plage sélectionnée, en cas de détection d'une action utilisateur relative à un élément de la deuxième zone (Z2).

2. Procédé de navigation selon la revendication 1 dans lequel les métadonnées comportent, pour au moins un extrait, des données d'usage (DU) associées audit extrait et dans lequel des données d'usages sont affichées suite à la détection de ladite action utilisateur.

3. Procédé de navigation selon la revendication 2 dans lequel les données d'usage affichées comportent des données permettant de déclencher une action relative audit extrait.

4. Procédé de navigation selon la revendication 1 dans lequel le contenu audio comporte une alternance d'extraits parlés et d'extraits musicaux, l'étape d'obtention de métadonnées comprend l'obtention pour au moins un extrait de type parlé, d'au moins un mot clé dudit extrait et de données de position temporelle permettant de repérer une position dudit extrait dans ledit contenu, l'étape d'affichage dans la première zone comprend l'affichage d'au moins un mot clé obtenu et le procédé comporte une étape de détection d'une action utilisateur relative à un mot clé affiché et une étape de mise en évidence dudit mot clé et d'au moins une plage représentant au moins un extrait et pour laquelle des données de position temporelle sont associées audit mot clé dans lesdites métadonnées.

5. Procédé de détermination de métadonnées relatives à au moins un extrait de type musical d'un contenu audio (C2), **caractérisé en ce qu'il** comporte les étapes suivantes :
- analyse (E102) dudit contenu pour déterminer des données de position temporelle (PMdi, PMfi) permettant de repérer une position d'au moins un extrait de type musical dans ledit contenu;
- obtention (E104) d'un identifiant (IEi) dudit au moins un extrait;
- enregistrement (E106) dans une mémoire, de métadonnées comportant pour ledit au moins un extrait, l'identifiant dudit au moins un extrait et lesdites données de position temporelle déterminées pour ledit au moins un extrait.

6. Procédé de détermination selon la revendication 5 dans lequel le contenu audio comporte une alternance d'extraits parlés et d'extraits musicaux, ladite analyse comporte une étape de détection des extraits parlés dans ledit contenu, une étape de détermination de données de position temporelle des extraits parlés et une étape de détermination de données de position temporelle des extraits de type musical en fonction des données de position temporelle des extraits parlés déterminés.

7. Procédé de détermination selon la revendication 6 dans lequel les données de position temporelle d'un extrait comprenant une position temporelle de début d'extrait et une position temporelle de fin d'extrait, et une position de début, respectivement une position de fin d'un extrait de type musical est la position de fin de l'extrait parlé précédant ledit extrait de type musical, respectivement la position de début de l'extrait parlé suivant ledit extrait de type musical.

8. Procédé de détermination selon la revendication 5 dans lequel l'étape d'obtention dudit identifiant dudit au moins un extrait comprend une étape de calcul d'au moins une signature numérique pour ledit extrait et une étape de recherche de ladite au moins une signature dans une base de signatures comportant des signatures et des identifiants associés.

9. Procédé de détermination selon la revendication 5 **caractérisé en ce qu'il** comporte une étape de détermination d'au moins un mot clé d'au moins un extrait parlé et une étape d'enregistrement dudit mot clé dans des données d'usage des métadonnées relatives audit extrait.

10. Dispositif de navigation (NAV) dans un contenu audio (C1, C2) comportant des extraits de type musical **caractérisé en ce qu'il** comporte :
- des moyens d'obtention (OBT) de métadonnées comprenant pour au moins un extrait musical dudit contenu, un identifiant dudit extrait et des données de position temporelle permettant de repérer une position dudit extrait dans ledit contenu;
- des moyens d'affichage (AFF) dans une première zone, d'au moins un identifiant d'extrait obtenu;
- des moyens d'affichage (AFF) dans une deuxième zone, d'une représentation temporelle dudit contenu audio dans laquelle au moins un extrait est représenté sous forme d'au moins une plage positionnée dans ladite représentation en fonction des données de position obtenues pour ledit au moins un extrait;
- des moyens de détection (DTC) d'une action utilisateur relative à un élément affiché dans une des zones, ledit élément étant un identifiant d'extrait ou une plage représentant un extrait;
- des moyens de mise en évidence (EVI) d'un identifiant d'extrait et d'au moins une plage représentant ledit extrait, en cas de sélection d'un élément dans la première zone;
- des moyens d'affichage (AFF) de métadonnées relatives audit extrait représenté par la plage sélectionnée, en cas de sélection d'un élément de la deuxième zone.

11. Dispositif de détermination (100) de métadonnées relatives à au moins un extrait de type musical d'un contenu audio (C2), **caractérisé en ce qu'il** comporte :
- des moyens d'analyse (ANL) dudit contenu pour déterminer des données de position temporelle permettant de repérer une position d'au moins un extrait de type musical dans ledit contenu;
- des moyens d'obtention (OBD) d'un identifiant dudit au moins un extrait;
- des moyens d'enregistrement (REG) dans une mémoire, de métadonnées comportant pour ledit au moins un extrait, l'identifiant dudit au moins un extrait et lesdites données de position temporelle déterminées pour ledit au moins un extrait.
